# EUROPEAN PATENT APPLICATION

(11) **EP 4 414 207 A1**
(43) Date of publication of application: **14.08.2024**
(21) Application number: 24153661.4
(22) Date of filing: 24.01.2024
(51) Int. Cl.: B60L 53/00, B60L 58/24, H01M 10/61, H01M 10/625, B60L 58/12

(54) **ELECTRIFIED VEHICLE AND METHOD FOR CONTROLLING THE SAME**

(30) Priority: 10.02.2023 JP 2023018986
(71) Applicant: TOYOTA JIDOSHA KABUSHIKI KAISHA, Toyota-shi, Aichi-ken 471-8571 (JP)
(72) Inventor: SASAKI, Hirotaka, Toyota-shi, Aichi-ken 471-8571 (JP)
(74) Representative: Cabinet Beau de Loménie

(57) **Abstract**

An electrified vehicle (1) includes an energy storage device (100), a temperature control device, and an electronic control unit (300). The energy storage device (100) is configured to supply power to a driving source (10). The temperature adjustment device is configured to perform temperature adjustment of the energy storage device (100). The electronic control unit (300) is configured to operate the temperature adjustment device when the temperature of the energy storage device (100) falls within a temperature range in which the temperature adjustment is performed. The electronic control unit (300) is configured to, when in a situation where charging is predicted to be performed after traveling of the electrified vehicle (1), set either an upper or lower limit of the temperature range using the state of charge of the energy storage device (100).

## Description

### BACKGROUND OF THE INVENTION

### 1. Field of the Invention

The present disclosure relates to electrified vehicles and methods for controlling the same.

### 2. Description of Related Art

An electrified vehicle is equipped with an energy storage device that supplies power to an electric motor that is a driving source and that is charged with power generated by the electric motor. Since this energy storage device generates heat during charging and discharging, the electrified vehicle is further equipped with a cooling device to control the temperature of the energy storage device within an appropriate temperature range.

For example, Japanese Unexamined Patent Application Publication No. 2012-104458 (JP 2012-104458 A) discloses a technique of calculating a target temperature of a battery so that the higher the state of charge (SOC) of the battery, the lower the target temperature.

### SUMMARY OF THE INVENTION

The energy storage device of the above electrified vehicle is sometimes fast-charged using external equipment. However, when the energy storage device is fast-charged from a low SOC state to a predetermined charged state, a higher charging current flows than when the energy storage device is fast-charged from a high SOC state to the predetermined charged state. The amount of heat generated by the energy storage device during charging is therefore larger than when the energy storage device is fast-charged from the high SOC state to the predetermined charged state. Accordingly, during charging, the temperature of the energy storage device may increase beyond a temperature range suitable for charging. As a result, the charging power may be limited and the charging time may become long.

The present disclosure provides an electrified vehicle and a method for controlling the same that reduce the possibility that the charging time may become long when performing charging using external equipment.

A first aspect of the present disclosure relates to an electrified vehicle including an energy storage device, a temperature adjustment device, and an electronic control unit. The energy storage device is configured to supply power to a driving source. The temperature adjustment device is configured to perform temperature adjustment of the energy storage device. The electronic control unit is configured to operate the temperature adjustment device when a temperature of the energy storage device falls within a temperature range in which the temperature adjustment is performed. The electronic control unit is configured to, when in a situation where charging is predicted to be performed after traveling of the electrified vehicle, set either an upper or lower limit of the temperature range using a state of charge (SOC) of the energy storage device.

According to the electrified vehicle of the first aspect of the present disclosure, when in the situation where charging is predicted to be performed after traveling of the electrified vehicle, either the upper or lower limit of the temperature range in which the temperature adjustment is performed is set using the SOC of the energy storage device. The energy storage device can thus be brought into a temperature state suitable for charging after traveling. Therefore, charging is less likely to be performed with the temperature of the energy storage device being out of the temperature range suitable for charging.

In the electrified vehicle of the first aspect of the present disclosure, the temperature adjustment device may include a cooling device configured to cool the energy storage device. The electronic control unit may be configured to, when in the situation where charging is predicted to be performed after traveling of the electrified vehicle, set the lower limit of the temperature range to a lower value when the SOC of the energy storage device is low than when the SOC of the energy storage device is high.

According to the electrified vehicle having the above configuration, when the SOC of the energy storage device is low, the temperature of the energy storage device can be made lower than when the SOC of the energy storage device is high. Therefore, even when charging is performed at a low SOC after traveling and the energy storage device generates heat during the charging, the temperature of the energy storage device is less likely to increase beyond the temperature range suitable for charging during.

In the electrified vehicle having the above configuration, the electronic control unit may be configured to determine that the situation is that charging is predicted to be performed after traveling of the electrified vehicle, when a facility configured to perform charging is set as a destination of the electrified vehicle.

According to the electrified vehicle having the above configuration, when a facility configured to perform charging is set as a destination of the electrified vehicle, it is predicted that charging will be performed after traveling of the electrified vehicle. Therefore, even when charging is performed at a low SOC after traveling and the energy storage device generates heat during the charging, the temperature of the energy storage device is less likely to increase beyond the temperature range suitable for charging.

In the electrified vehicle having the above configuration, the electronic control unit may be configured to set the lower limit of the temperature range to a lower value when the SOC at a time the facility is set as the destination is low than when the SOC at the time the facility is set as the destination is high.

According to the electrified vehicle having the above configuration, the energy storage device will have a lower SOC at the time of arrival at the destination. The lower limit of the temperature range is set to a lower value when the SOC at the time the facility is set as the destination is low. Therefore, even when charging is performed after traveling of the electrified vehicle and the energy storage device generates heat during the charging, the temperature of the energy storage device is less likely to increase beyond the temperature range suitable for charging.

In the electrified vehicle having the above configuration, the electronic control unit may be configured to set the lower limit of the temperature range to a lower value when the SOC at a time the electrified vehicle arrives at the destination is low than when the SOC at the time the electrified vehicle arrives at the destination is high.

According to the electrified vehicle having the above configuration, the energy storage device will have a lower SOC at the time of arrival at the destination. The lower limit of the temperature range is set to a lower value when the SOC at the time the electrified vehicle arrives at the destination is low. Therefore, even when charging is performed after traveling of the electrified vehicle and the energy storage device generates heat during the charging, the temperature of the energy storage device is less likely to increase beyond the temperature range suitable for charging.

In the electrified vehicle having the above configuration, the electronic control unit may be configured to set the lower limit of the temperature range to a lower value when an outside air temperature is high than when the outside air temperature is low.

According to the electrified vehicle having the above configuration, when the outside air temperature is high, the temperature of the energy storage device is more likely to increase than when the outside air temperature is low. The lower limit of the temperature range is set to a lower value when the outside air temperature is high. Therefore, even when charging is performed after traveling of the electrified vehicle and the energy storage device generates heat during the charging, the temperature of the energy storage device is less likely to increase beyond the temperature range suitable for charging.

In the electrified vehicle having the above configuration, the electronic control unit may be configured to set the lower limit of the temperature range to a lower value when a load of the driving source is high than when the load of the driving source is low.

According to the electrified vehicle having the above configuration, when the load of the driving source is high, the temperature of the energy storage device is more likely to increase than when the load of the driving source is low. The lower limit of the temperature range is set to a lower value when the load of the driving source is high. Therefore, even when charging is performed after traveling of the electrified vehicle and the energy storage device generates heat during the charging, the temperature of the energy storage device is less likely to increase beyond the temperature range suitable for charging.

In the electrified vehicle of the first aspect of the present disclosure, the temperature adjustment device may include a heating device configured to heat the energy storage device. The electronic control unit may be configured to, when in the situation where charging is predicted to be performed after traveling of the electrified vehicle, set the upper limit of the temperature range to a higher value when the SOC of the energy storage device is low than when the SOC of the energy storage device is high.

According to the electrified vehicle having the above configuration, when the SOC of the energy storage device is low, the temperature of the energy storage device can be made higher than when the SOC of the energy storage device is high. Therefore, when charging is performed at a low SOC after traveling, the temperature of the energy storage device is less likely to be kept lower than the temperature range suitable for charging during the charging.

A second aspect of the present disclosure relates to a method for controlling an electrified vehicle equipped with an energy storage device and a temperature adjustment device. The energy storage device is configured to supply power to a driving source. The temperature adjustment device is configured to perform temperature adjustment of the energy storage device. The method includes: operating the temperature adjustment device when a temperature of the energy storage device falls within a temperature range in which the temperature adjustment is performed; and when in a situation where charging is predicted to be performed after traveling of the electrified vehicle, setting either an upper or lower limit of the temperature range using an SOC of the energy storage device.

According to the method of the second aspect of the present disclosure, when in the situation where charging is predicted to be performed after traveling of the electrified vehicle, either the upper or lower limit of the temperature range in which the temperature adjustment is performed is set using the SOC of the energy storage device. The energy storage device can thus be brought into a temperature state suitable for charging after traveling. Therefore, charging is less likely to be performed with the temperature of the energy storage device being out of the temperature range suitable for charging.

According to the electrified vehicle of the first aspect and the method of the second aspect of the present disclosure, the charging time is less likely to become long when performing charging using external equipment.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows an example of the configuration of an electrified vehicle according to the present disclosure;
FIG. 2 is a graph illustrating an example of the relationship between charging current and state of charge (SOC) in the electrified vehicle;
FIG. 3A is a graph illustrating an example of the results of comparison among the amounts of heat generation for different SOCs at the start of charging in the electrified vehicle;
FIG. 3B is a graph illustrating an example of the results of comparison among the amounts of heat generation for different SOCs at the start of charging in the electrified vehicle;
FIG. 3C is a graph illustrating an example of the results of comparison among the amounts of heat generation for different SOCs at the start of charging in the electrified vehicle;
FIG. 3D is a graph illustrating an example of the results of comparison among the amounts of heat generation for different SOCs at the start of charging in the electrified vehicle;
FIG. 4 is a flowchart showing an example of a process that is performed by an electronic control unit (ECU) mounted on the electrified vehicle;
FIG. 5 is a graph illustrating an example of a map showing the relationship between SOC and lower limit temperature of a battery mounted on the electrified vehicle;
FIG. 6 is a graph illustrating an example of a map showing the relationship between offset amount α and outside air temperature To that will be described later;
FIG. 7 is a graph illustrating an example of a map showing the relationship between threshold value β and mean value of squares of currents that will be described later;
FIG. 8 is a graph illustrating an example of the result of comparison between the cruising ranges with and without cooling control in an environment where the outside air temperature is high;
FIG. 9 is a graph illustrating an example of the result of comparison between the charging times with and without the cooling control in the environment where the outside air temperature is high;
FIG. 10 is a graph illustrating an example of the result of comparison between the cruising ranges with and without the cooling control in an environment where the outside air temperature is low;
FIG. 11 is a graph illustrating an example of the result of comparison between the charging times with and without the cooling control in the environment where the outside air temperature is low;
FIG. 12 is a flowchart showing an example of a process that is performed by an ECU according to a modification of the embodiment; and
FIG. 13 is a graph illustrating an example of a map showing the relationship between SOC and upper limit temperature of a battery according to the modification.

### DETAILED DESCRIPTION OF EMBODIMENTS

An embodiment of the present disclosure will be described in detail below with reference to the drawings. The same or corresponding parts are denoted by the same signs throughout the drawings, and description thereof will not be repeated.

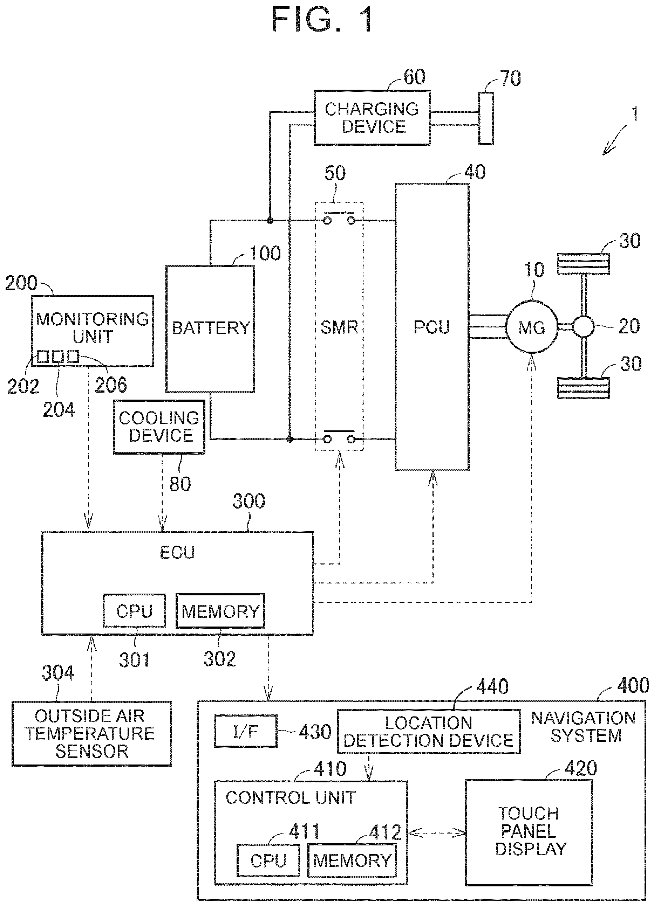

FIG. 1 shows an example of the configuration of an electrified vehicle 1. The electrified vehicle 1 is equipped with an energy storage device that supplies power to a driving source. Examples of the electrified vehicle 1 include a battery electric vehicle and a plug-in hybrid electric vehicle. In the present embodiment, an example in which the electrified vehicle 1 is a battery electric vehicle will be described.

As shown in FIG. 1, the electrified vehicle 1 includes a motor generator (MG) 10, a power transmission gear 20, drive wheels 30, a power control unit (PCU) 40, a system main relay (SMR) 50, a charging device 60, an inlet 70, a cooling device 80, a battery 100, a monitoring unit 200, an electronic control unit (ECU) 300, and a navigation system 400. The electrified vehicle 1 uses the MG 10 as a driving source, and is configured to travel by supplying power stored in the battery 100 to the MG 10 via the PCU 40.

The MG 10 is, for example, a three-phase alternating current rotating electrical machine, and has both a function as an electric motor (motor) and a function as an electric generator (generator). The output torque of the MG 10 is transmitted to the drive wheels 30 via the power transmission gear 20 that includes a reduction gear, a differential gear, etc.

During braking of the electrified vehicle 1, the MG 10 is driven by the drive wheels 30, and the MG 10 operates as a generator. The MG 10 may also function as a braking device that performs regenerative braking by converting kinetic energy of the electrified vehicle 1 to electric power. Regenerative power generated by the regenerative braking force of the MG 10 is stored in the battery 100.

The PCU 40 is a power conversion device that bidirectionally converts power between the MG 10 and the battery 100. The PCU 40 includes, for example, an inverter and a converter that operate based on control signals from the ECU 300. During discharging of the battery 100, the converter boosts direct current (DC) power supplied from the battery 100 and supplies the boosted DC power to the inverter, and the inverter converts the DC power supplied from the converter to alternating current (AC) power and drives the MG 10 with the AC power. During charging of the battery 100, the inverter converts AC power generated by the MG 10 to DC power and supplies the DC power to the converter, and the converter steps down the DC power supplied from the inverter to a voltage suitable for charging the battery 100 and supplies the voltage to the battery 100.

The PCU 40 stops charging and discharging by stopping the inverter and the converter based on a control signal from the ECU 300. The converter may be omitted from the PCU 40.

The SMR 50 is electrically connected to power lines connecting the battery 100 and the PCU 40. When the SMR 50 is closed (i.e., electrically connected) in response to a control signal from the ECU 300, power can be transferred between the battery 100 and the PCU 40. On the other hand, when the SMR 50 is open (i.e., electrically disconnected) in response to a control signal from the ECU 300, the battery 100 and the PCU 40 are electrically disconnected from each other.

When power is supplied from the inlet 70 to the charging device 60, the charging device 60 converts the power from the inlet 70 to power that can charge the battery 100. For example, the charging device 60 may be configured to convert AC power supplied from the inlet 70 to DC power, or may be configured to convert DC power supplied from the inlet 70 to a DC voltage suitable for charging the battery 100. The charging device 60 operates according to control signals from the ECU 300.

The inlet 70 has a shape that can be fitted with a connector mounted at an end of a charging cable (not shown) connected to a charging station (e.g., a fast charger). When the connector is connected to the inlet 70, the inlet 70 and the connector are electrically connected to each other. Power from the charging station can thus be supplied to the battery 100 via the charging device 60.

The cooling device 80 includes, for example, a cooling fan that operates in response to a control signal from ECU 300. The cooling device 80 uses the cooling fan to circulate a cooling medium (e.g., cooling air) within a battery case (not shown) housing the battery 100 or to stop circulating the cooling medium. For example, the cooling device 80 may be configured to use a coolant as a cooling medium and may cool the battery 100 by circulating the coolant through a coolant passage in the battery case by a water pump and causing heat exchange between the coolant and the battery 100. The cooling device 80 is an example of the "temperature adjustment device" configured to adjust the temperature of the battery 100 in the present embodiment.

The battery 100 is an energy storage device that stores power for driving the MG 10 (that is, power for traveling). The battery 100 is a chargeable and dischargeable DC power supply. For example, the battery 100 may be composed of a plurality of cells (battery elements) connected in series, or may be composed of a plurality of parallel battery blocks, each composed of a plurality of cells connected in parallel, connected in series. For example, the cells may be lithium-ion secondary batteries. The cells are not limited to lithium-ion secondary batteries, and may be other secondary batteries (e.g., nickel metal hydride secondary batteries). Alternatively, the cells may be all-solid-state batteries including a solid electrolyte.

The monitoring unit 200 includes a voltage sensor 202 that detects the voltage VB of the battery 100, a current sensor 204 that detects the current IB of the battery 100, and a temperature sensor 206 that detects the temperature TB of the battery 100 (hereinafter also referred to as "battery temperature"). The monitoring unit 200 calculates the state of charge (SOC) of the battery 100 using the voltage VB, the current IB, and the temperature TB. Various known methods such as current integration (Coulomb counting) and open-circuit voltage (OCV) estimation can be used to calculate the SOC. The monitoring unit 200 sends the detection results from the voltage sensor 202, the current sensor 204, and the temperature sensor 206 and the SOC calculation result to the ECU 300. The ECU 300 may calculate the SOC instead of the monitoring unit 200.

The ECU 300 includes a central processing unit (CPU) 301 and a memory 302. The memory 302 includes various memories such as a read-only memory (ROM) and a random access memory (RAM). Based on signals received from the monitoring unit 200 and an outside air temperature sensor 304 and information (e.g., maps and programs) stored in the memory 302, the ECU 300 controls an in-vehicle device (e.g., the PCU 40, the SMR 50, the charging device 60, the cooling device 80, or the navigation system 400) so as to bring the electrified vehicle 1 to a desired state.

The outside air temperature sensor 304 is connected to the ECU 300. The outside air temperature sensor 304 detects the temperature To outside the electrified vehicle 1 (hereinafter referred to as "outside air temperature"). The outside air temperature sensor 304 sends a signal indicating the detected outside air temperature To to the ECU 300.

The navigation system 400 includes a control unit 410, a touch panel display 420, an interface 430, and a location detection device 440. Information on an image to be displayed on the touch panel display 420 is sent from the ECU 300 to the navigation system 400 via the interface 430.

The control unit 410 includes a CPU 411 and a memory 412. The control unit 410 is configured to communicate with the ECU 300. The control unit 410 receives an operation signal based on a user's operation from the touch panel display 420. The control unit 410 executes display control on the touch panel display 420, so that various kinds of information are displayed on a display unit of the touch panel display 420.

The control unit 410 executes the display control on the touch panel display 420 by the CPU 411 executing programs stored in the memory 412. The display control need not necessarily be executed by software, and may be executed by dedicated hardware (electronic circuit).

The touch panel display 420 includes an input device (touch panel) that receives input from the user. The control unit 410 receives a signal generated by a user's operation on the input device. The user can input a predetermined instruction or request to the input device. Instead of or in addition to the touch panel, various switches, various pointing devices or keyboards, etc. may be used as the input device.

The location detection device 440 detects the location of the electrified vehicle 1 using, for example, Global Positioning System (GPS) satellites, a wireless local area network (wireless LAN), etc. The location detection device 440 sends information on the location detection result for the electrified vehicle 1 to the control unit 410.

For example, map information is stored in the memory 412 of the control unit 410. The control unit 410 identifies a travel route on a map from the current location of the electrified vehicle 1 to a destination set by a user's operation, and provides guidance to guide the electrified vehicle 1 traveling on the travel route to the destination.

The control unit 410 causes the touch panel display 420 to display the map information and guidance information, identifies a destination input by a user's operation, and displays a plurality of travel route options to the identified destination. The guidance information includes, for example, information on the locations of facilities with a fast charging device etc. that can charge the battery 100 of the electrified vehicle 1.

In the electrified vehicle 1 having the above configuration, the battery 100 is sometimes fast-charged using external equipment. However, a higher charging current may flow when the battery 100 is fast-charged from a low SOC state to a predetermined charged state (e.g., a fully charged state) than when the battery 100 is fast-charged from a high SOC state to the predetermined charged state.

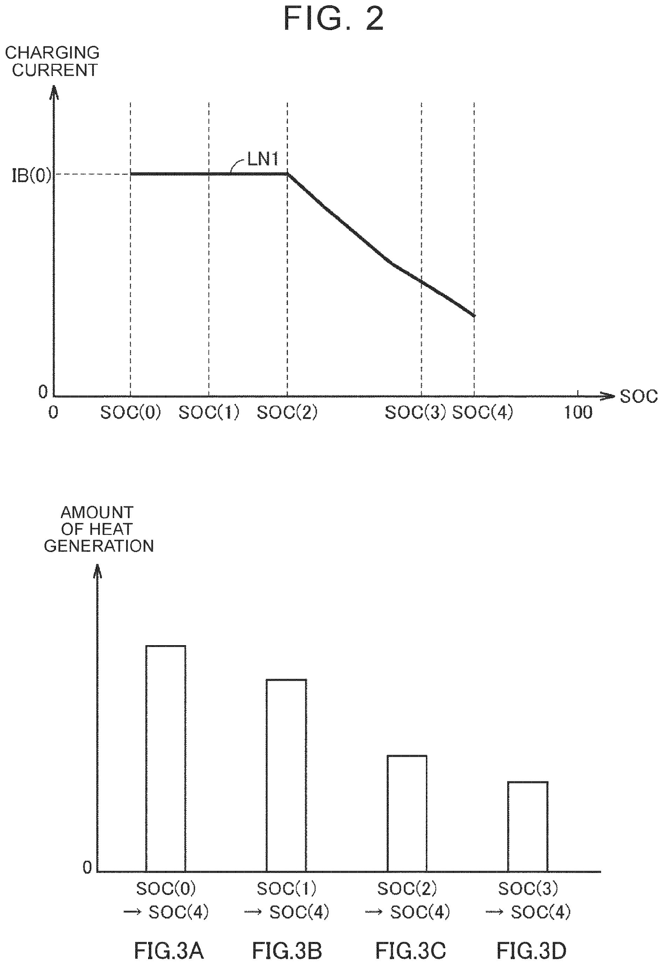

FIG. 2 is a graph illustrating an example of the relationship between the charging current and the SOC. The ordinate in FIG. 2 represents the charging current during charging of the battery 100. The abscissa in FIG. 2 represents the SOC of the battery 100. LN1 in FIG. 2 shows an example of how the charging current changes with a change in SOC of the battery 100.

As shown by LN1 in FIG. 2, the charging current is constant at IB(0) when the SOC of the battery 100 is in the range of SOC(2) or less. When the SOC of the battery 100 is in the range higher than SOC(2), the charging current decreases from IB(0) as the SOC increases.

FIG. 3A to FIG. 3D are graphs illustrating an example of the results of comparison among the amounts of heat generation for different SOCs at the start of charging. The ordinate in FIG. 3A to FIG. 3D represent the amount of heat generation. FIG. 3A shows an example of the amount of heat generated when the SOC at the start of charging is SOC(0) and charging is performed until the SOC reaches SOC(4). FIG. 3B shows an example of the amount of heat generated when the SOC at the start of charging is SOC(1) (> SOC(0)) and charging is performed until the SOC reaches SOC(4). FIG. 3C shows an example of the amount of heat generated when the SOC at the start of charging is SOC(2) (> SOC(1)) and charging is performed until the SOC reaches SOC(4). FIG. 3D shows an example of the amount of heat generated when the SOC at the start of charging is SOC(3) (> SOC(2)) and charging is performed until the SOC reaches SOC(4).

As shown in FIG. 3A to FIG. 3D, the lower the SOC at the start of charging, the larger the amount of heat generated during charging. In particular, the amount of heat generation increases in a shorter period of time during fast charging than during normal charging. Therefore, during charging, the temperature of the battery 100 may increase beyond the temperature range suitable for charging. As a result, the charging power may be limited and the charging time may become long.

Accordingly, in the present embodiment, when in a situation where charging is predicted to be performed after traveling of the electrified vehicle 1, the ECU 300 sets either the upper or lower limit of the temperature range in which temperature adjustment is performed, using the SOC of the energy storage device. In the present embodiment, when, for example, in the situation where charging is predicted to be performed after traveling of the electrified vehicle 1, the ECU 300 sets the lower limit of the temperature range in which the battery 100 is cooled to a lower value when the SOC of the battery 100 is low than when the SOC of the battery 100 is high.

Accordingly, when the SOC of the battery 100 is low, the temperature TB of the battery 100 can be made lower than when the SOC of the battery 100 is high. Therefore, even when charging is performed at a low SOC after traveling and the battery 100 generates heat during the charging, the temperature TB of the battery 100 is less likely to increase beyond the temperature range suitable for charging.

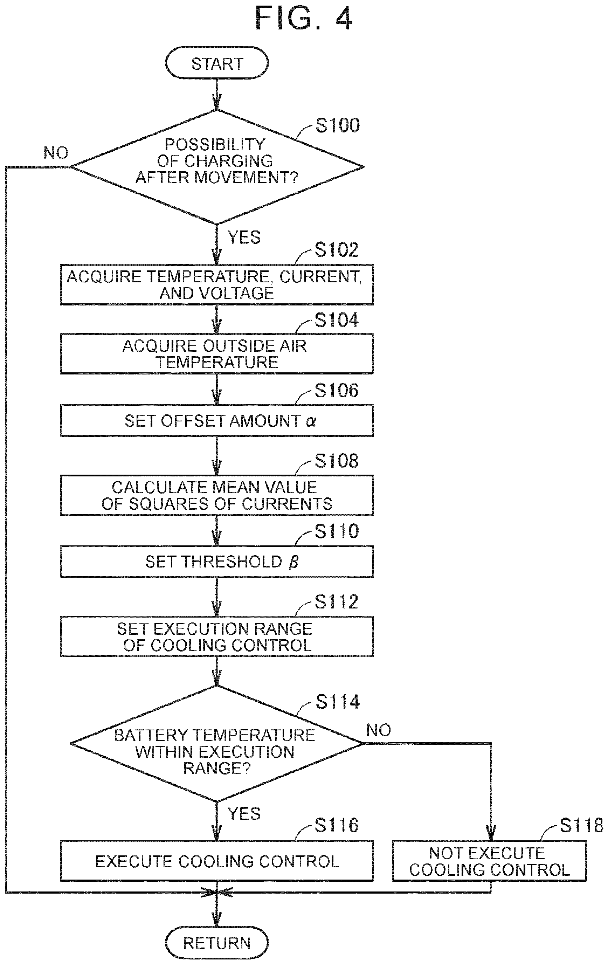

Hereinafter, an example of a process that is performed by the ECU 300 will be described with reference to FIG. 4. FIG. 4 is a flowchart showing an example of the process that is performed by the ECU 300. A series of steps shown in this flowchart is repeatedly performed by the ECU 300 at predetermined cycles.

In step (hereinafter step is referred to as "S") 100, the ECU 300 determines whether there is a possibility that charging will be performed after movement. For example, when a facility that can fast-charge the battery 100 of the electrified vehicle 1 is set as a destination of the electrified vehicle 1, the ECU 300 determines that it is the situation where charging is predicted to be performed after traveling, namely the ECU 300 determines that there is a possibility that charging will be performed after movement. When it is determined that there is a possibility that charging will be performed after movement (YES in S100), the process proceeds to S102.

In S102, the ECU 300 acquires the temperature TB, current IB, and voltage VB of the battery 100. The ECU 300 acquires information indicating the detection results of the temperature TB, current IB, and voltage VB from the monitoring unit 200 described above. The process then proceeds to S104.

In S104, the ECU 300 acquires the outside air temperature To. The ECU 300 acquires information indicating the detection result of the outside air temperature To from the outside air temperature sensor 304. The process then proceeds to S106.

In S106, the ECU 300 sets an offset amount α. The offset amount α refers to the offset amount in the direction of the axis representing the temperature in a map showing the relationship between the SOC and the lower limit value of the temperature at which the cooling device 80 is activated (hereinafter referred to as "lower limit temperature").

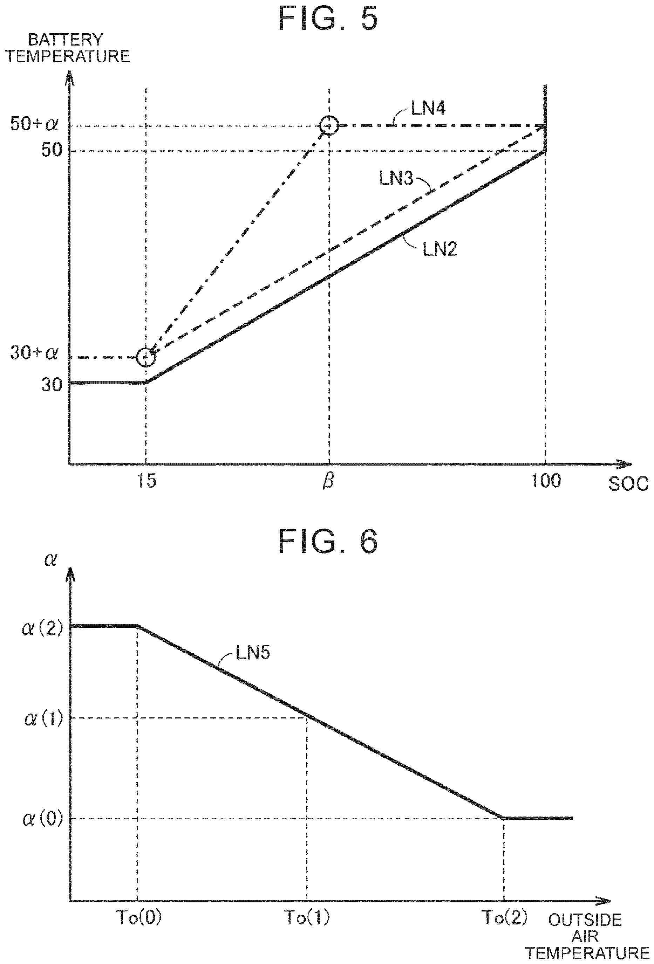

FIG. 5 is a graph illustrating an example of the map showing the relationship between the SOC and lower limit temperature of the battery 100. The ordinate in FIG. 5 represents the temperature TB of the battery 100. The abscissa in FIG. 5 represents the SOC of the battery 100. LN2 (continuous line) in FIG. 5 is a reference line showing how the lower limit temperature changes with a change in SOC of the battery 100. LN3 (dashed line) in FIG. 5 is a line after offset, showing how the lower limit temperature changes with a change in SOC of the battery 100.

As shown by LN2 in FIG. 5, for example, when the SOC of the battery 100 is 15% or less, the lower limit temperature is set to 30°C. When the SOC of the battery 100 is 100%, the lower limit temperature is set to 50°C. When the SOC of the battery 100 is higher than 15% and lower than 100%, the lower limit temperature is set so as to change linearly from 30°C to 50°C while the SOC changes from 15% to 100%. LN3 (dashed line) in FIG. 5 is set by translating LN2 in FIG. 5 by α in the direction in which the temperature increases.

The ECU 300 sets the offset amount α using the acquired outside air temperature To and a map showing the relationship between the offset amount α and the outside air temperature To. FIG. 6 is a graph illustrating an example of the map showing the relationship between the offset amount α and the outside air temperature To. The ordinate in FIG. 6 represents the offset amount α. The abscissa in FIG. 6 represents the outside air temperature To. LN5 in FIG. 6 shows how the offset amount α changes with a change in outside air temperature To.

As shown by LN5 in FIG. 6, for example, the relationship between the offset amount α and the outside air temperature To is set so that the offset amount α is α(0) when the outside air temperature To is equal to or higher than To(2). The relationship between the offset amount α and the outside air temperature To is also set so that the offset amount α is α(2) when the outside air temperature To is equal to or lower than To(0). As shown by LN5 in FIG. 6, the relationship between the offset amount α and the outside air temperature To is set so that the offset amount α changes linearly from α(2) to α(0) with the outside air temperature To in the section where the outside air temperature To is in the range from To(0) to To(2).

As shown in FIG. 6, for example, when the acquired outside air temperature To is To(1), the ECU 300 sets the offset amount α to the value α(1) obtained using LN5 in FIG. 6. After the offset amount α is set, the process proceeds to S108.

In S108, the ECU 300 calculates the mean value of the squares of the currents IB. The ECU 300 calculates the mean value of the squares of the currents IB acquired during the most recent predetermined period including the acquired current IB. The predetermined period is not particularly limited, and is adapted through experiments etc. After the mean value of the squares of the currents IB is calculated, the process proceeds to S110.

In S 110, the ECU 300 sets a threshold β. The threshold β indicates the lower limit value of the SOC range for which the lower limit temperature is the same as that for the SOC of 100%. That is, the lower limit temperature is set to the same value for the SOC in the range from the threshold β to 100%. In this case, for the SOC in the range from 15% to the threshold β, the relationship between the SOC and the lower limit temperature is set so that the lower limit temperature changes linearly with the SOC from the lower limit temperature corresponding to the SOC of 15% to the lower limit temperature corresponding to the threshold β.

LN4 (long dashed short dashed line) in FIG. 5 shows the relationship between the SOC and the lower limit temperature that is set based on the offset amount α and the threshold β. As shown by LN4 in FIG. 5, the lower limit temperature is set to "30°C + α" when the SOC is up to 15%. For the SOC in the range from 15% to the threshold β, the lower limit temperature is set so as to change linearly from "30°C + α" to "50°C + α" with the SOC. The lower limit temperature is set to "50°C + α" when the SOC is equal to or higher than the threshold β.

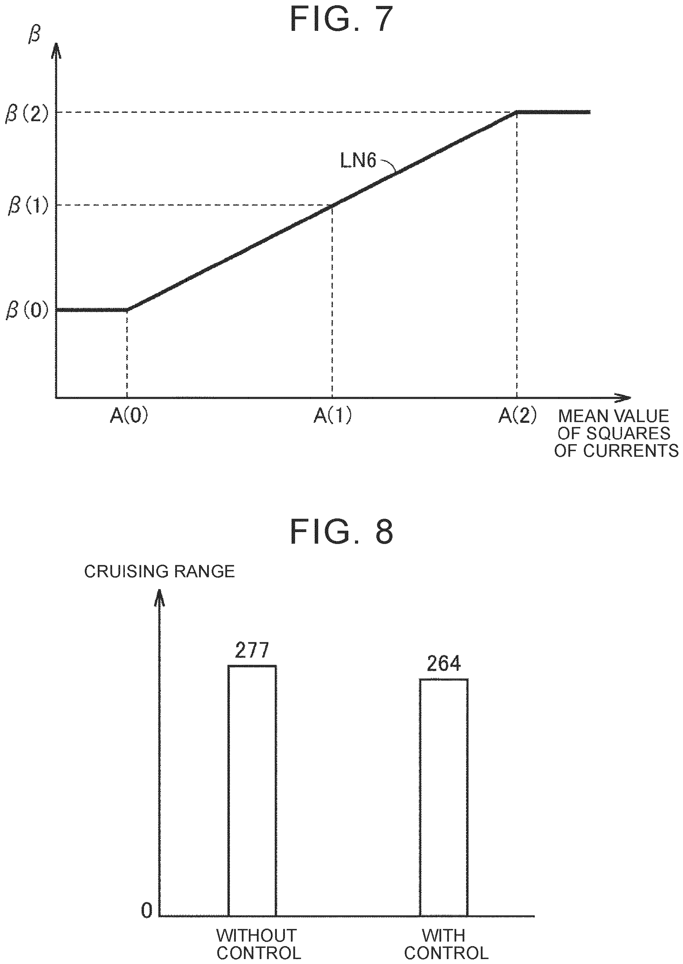

The ECU 300 sets the threshold β using the mean value of the squares of the currents IB and a map showing the relationship between the threshold β and the mean value. FIG. 7 is a diagram showing an example of the map showing the relationship between the threshold β and the mean value of the squares of the currents. The ordinate in FIG. 7 represents the threshold β. The abscissa in FIG. 7 represents the mean value of the squares of the currents IB. LN6 in FIG. 7 shows how the threshold β changes with a change in mean value of the squares of the currents IB.

As shown by LN6 in FIG. 7, for example, the relationship between the threshold β and the mean value of the squares of the currents IB is set so that the threshold β is β(0) when the mean value is smaller than A(0). The relationship between the threshold β and the mean value of the squares of the currents IB is also set so that the threshold β changes linearly from is β(0) to β(2) in the section where the mean value is in the range from A(0) to A(2). The relationship between the threshold β and the mean value of the squares of the currents IB is also set so that the threshold β is β(2) when the mean value is larger than A(2).

As shown in FIG. 7, for example, when the calculated mean value of the squares of the currents IB is A(1), the ECU 300 sets the threshold β to the value β(1) obtained using LN6 in FIG. 7. After the threshold β is set, the process proceeds to S112.

In S112, the ECU 300 sets the execution range of cooling control. That is, the ECU 300 sets the lower limit temperature shown by line LN4 in FIG. 5, namely the line set using reference line LN2 in FIG. 5, the offset amount α, and the threshold β, as the lower limit of the execution range.

In S114, the ECU 300 determines whether the battery temperature is within the execution range. Specifically, when the temperature TB is equal to or higher than the lower limit temperature corresponding to the current SOC, the ECU 300 determines that the battery temperature is within the execution range. When it is determined that the battery temperature is within the execution range (YES in S 114), the process proceeds to S 1 16.

In S116, the ECU 300 executes the cooling control. For example, the ECU 300 activates devices for circulating the coolant, such as a fan and a pump, to execute the cooling control for cooling the battery 100. When it is determined that the battery temperature is not within the execution range (NO in S114), the process proceeds to S 118.

In S118, the ECU 300 does not execute the cooling control. When the cooling device 80 is in an activated state, the ECU 300 stops the cooling device 80. When the cooling device 80 is in a non-activated state, the ECU 300 keeps the cooling device 80 in the non-activated state. When it is determined that there is no possibility that charging will be performed after movement of the electrified vehicle 1 (NO in S100), this process ends.

An example of the operation of the electrified vehicle 1 based on the above structure and flowchart will be described.

For example, when the user selects a facility (charging station) capable of fast charging as a destination when starting to drive the electrified vehicle 1, it is determined that there is a possibility that charging will be performed after movement of the electrified vehicle 1 (YES in S100). In this case, the temperature TB, the current IB, and the voltage VB are acquired (S102), and the outside air temperature To is also acquired (S104). The offset amount α is then set using the acquired outside air temperature To and the map showing the relationship between the offset amount α and the outside air temperature To (S106). Thereafter, the mean value of the squares of the currents IB in the most recent predetermined period is calculated (S108), and the threshold β is set using the calculated mean value of the squares of the currents IB and the map showing the relationship between the threshold β and the mean value (S110). The execution range of the cooling control is set by setting the lower limit temperature for each SOC using the set offset amount α, the threshold β, and the reference line shown by LN2 in FIG. 5 (S112).

When the temperature TB is within the set execution range, the cooling control is executed (S116). When the temperature TB is not within the set execution range, the cooling control will not be executed (S118).

In particular, when the SOC is low, the lower limit of the execution range is set to a lower value than when the SOC is high. When the outside air temperature is high, the lower limit of the execution range is also set to a lower value than when the outside air temperature is low.

Therefore, when there is a possibility that charging will be performed after movement of the electrified vehicle 1, the cooling control is executed so that the temperature of the battery 100 becomes lower than when the SOC is high. This can reduce an increase in temperature of the battery 100 by the time of arrival at the destination. The charging power is therefore less likely to be limited due to an increase in temperature of the battery 100 during charging of the battery 100.

FIG. 8 is a graph illustrating an example of the result of comparison between the cruising ranges with and without this control in an environment where the outside air temperature is high. This control refers to the control that is executed by the process of the flowchart of FIG. 4. The ordinate in FIG. 8 represents the cruising range. The left bar in the graph of FIG. 8 shows the cruising range (277 km as an example) when this control is not executed. The right bar in the graph of FIG. 8 shows the cruising range (264 km as an example) when this control is executed.

As shown in FIG. 8, in the environment where the outside air temperature is high, the offset amount α is smaller than in an environment where the outside air temperature is low, and therefore the lower limit temperature for the same SOC is set to a lower value than in the environment where the outside air temperature is low. Therefore, the cooling device 80 is activated earlier than in the environment where the outside air temperature is low. As the cooling device 80 is activated earlier, the cruising range is shortened accordingly, but the temperature of the battery 100 at the time of arrival at the destination (that is, the facility capable of fast charging) can be lowered.

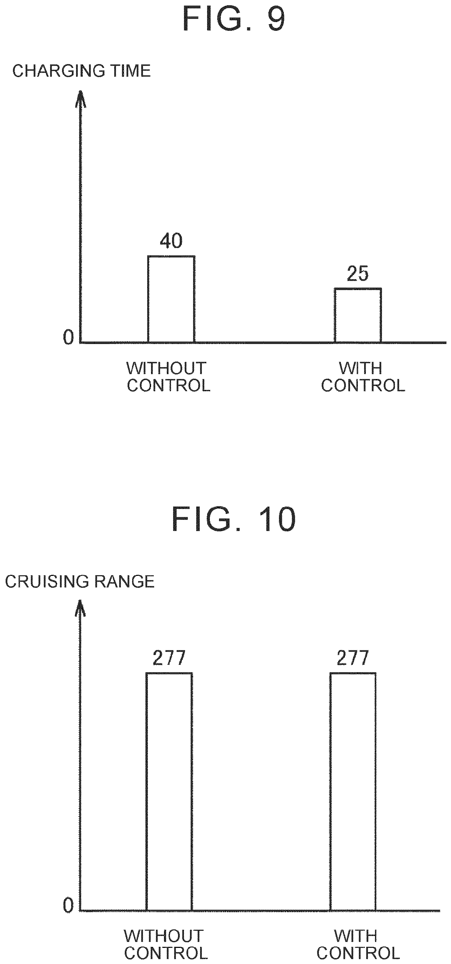

FIG. 9 is a graph illustrating an example of the result of comparison between the charging times with and without this control in the environment where the outside air temperature is high. The ordinate in FIG. 9 represents the charging time. The left bar in the graph of FIG. 9 shows the charging time (40 minutes as an example) when this control is not executed. The right bar in the graph of FIG. 9 shows the charging time (25 minutes as an example) when this control is executed.

As shown in FIG. 9, when this control is not executed, the temperature of the battery 100 at the time of arrival at the facility capable of fast charging is higher than when this control is executed. As a result, when fast charging is started and the temperature of the battery 100 increases, the charging power may be limited due to the increase in temperature of the battery 100, and the charging time may become long. On the other hand, when this control is executed, the temperature of the battery 100 at the time of arrival at the facility capable of fast charging is lower than when this control is not executed. As a result, even when fast charging is started and the temperature of the battery 100 increases, the charging time is less likely to become long as long as the temperature of the battery 100 does not increase high enough for the charging power to be limited.

FIG. 10 is a graph illustrating an example of the result of comparison between the cruising ranges with and without this control in the environment where the outside air temperature is low. The ordinate in FIG. 10 represents the cruising range. The left bar in the graph of FIG. 10 shows the cruising range (277 km as an example) when this control is not executed. The right bar in the graph of FIG. 10 shows the cruising range (277 km as an example) when this control is executed.

As shown in FIG. 10, in the environment where the outside air temperature is low, the offset amount α is larger than in the environment where the outside air temperature is high, and therefore the lower limit value of the temperature at which the cooling device 80 is activated for the same SOC is higher than in the environment where the outside air temperature is high. Accordingly, the cooling device 80 is kept stopped, unlike in the environment where the outside air temperature is high. As the cooling device 80 is kept stopped, the power for activating the cooling device 80 will not be consumed. Therefore, the cruising range is the same regardless of whether this control is executed.

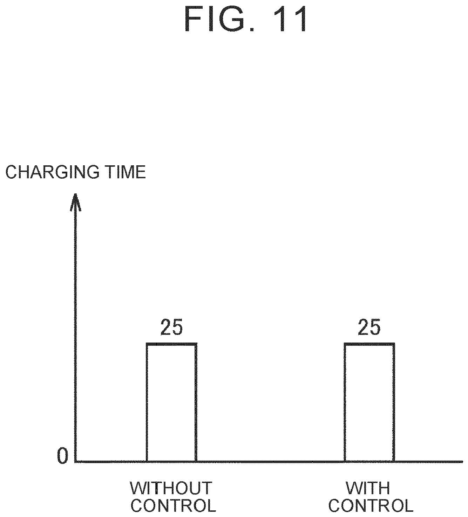

FIG. 11 is a graph illustrating an example of the result of comparison between the charging times with and without this control in the environment where the outside air temperature is low. The ordinate in FIG. 11 represents the charging time. The left bar in the graph of FIG. 11 shows the charging time (25 minutes as an example) when this control is not executed. The right bar in the graph of FIG. 11 shows the charging time (25 minutes as an example) when this control is executed.

As shown in FIG. 11, in the environment where the outside air temperature is low, the cooling device 80 is kept stopped regardless of whether this control is executed, and therefore the temperature of the battery 100 at the time of arrival at the facility capable of fast charging is the same regardless of whether this control is executed. As a result, the charging time is also the same regardless of whether this control is executed.

As described above, according to the electrified vehicle 1 of the present embodiment, when the SOC of the battery 100 is low, the temperature of the battery 100 can be made lower than when the SOC is high. Therefore, even when charging is performed at a low SOC after traveling and the battery 100 generates heat during the charging, the temperature of the battery 100 is less likely to increase beyond the temperature range suitable for charging. The electrified vehicle can thus be provided that reduces the possibility that the charging time may become long when performing charging using external equipment.

When a facility capable of charging the electrified vehicle 1 is set as a destination of the electrified vehicle 1, it is predicted that charging will be performed after traveling of the electrified vehicle 1. When the SOC of the battery 100 is low, the lower limit of the temperature range (execution range) is set to a lower value than when the SOC of the battery 100 is high. Accordingly, even when charging is performed after traveling and the battery 100 generates heat during the charging, the temperature of the battery 100 is less likely to increase beyond the temperature range suitable for charging.

When the SOC is low at the time the facility capable of charging the electrified vehicle 1 is set as a destination, the battery 100 will have a lower SOC at the time of arrival at the destination. In this case, the lower limit of the temperature range is set to a lower value. Therefore, even when charging is performed after traveling of the electrified vehicle 1 and the battery 100 generates heat during the charging, the temperature of the battery 100 is less likely to increase beyond the temperature range suitable for charging.

When the outside air temperature is high, the temperature of the battery 100 is more likely to increase than when the outside air temperature is low. The lower limit of the temperature range is therefore set to a lower value than when the outside air temperature is high. Accordingly, even when the battery 100 generates heat during charging performed after traveling, the temperature of the battery 100 is less likely to increase beyond the temperature range suitable for charging.

When the load of the MG 10 that is a driving source (i.e., the mean value of the squares of the currents IB) is high, the lower limit of the temperature range is set to a lower value than when the load of the driving source is low. Therefore, when there is a possibility that charging will be performed after movement of the electrified vehicle 1, the cooling control is executed so that the temperature of the battery 100 is lowered. This can reduce an increase in temperature of the battery 100 by the time of arrival at the destination. The charging power is therefore less likely to be limited due to an increase in temperature of the battery 100 during charging of the battery 100.

Next, modifications of the above embodiment will be described. In the above embodiment, the outside air temperature To is acquired using the outside air temperature sensor 304 mounted on the electrified vehicle 1. However, the outside air temperature To may be acquired from a server etc. via a communication network outside the electrified vehicle 1 (such as the Internet), or may be acquired from another vehicle traveling around the electrified vehicle 1 directly or via the communication network.

In the above embodiment, when the SOC at the time the destination of the electrified vehicle 1 is set is low, the lower limit of the temperature range is set to a lower value than when the SOC at the time the destination of the electrified vehicle 1 is set is high. However, instead of the SOC at the time the destination of the electrified vehicle 1 is set, when the SOC at the time the electrified vehicle 1 arrives at the destination is low, the lower limit of the temperature range may be set to a lower value than when the SOC at the time the electrified vehicle 1 arrives at the destination is high. For example, the ECU 300 may estimate the SOC at the time of arrival at the destination in consideration of the SOC of the battery 100 before movement, the length of the travel route, etc., and may set the lower limit of the temperature range using the estimated SOC.

In this case, even when charging is performed after the electrified vehicle 1 arrives at the destination and the battery 100 generates heat during the charging, the temperature of the battery 100 is less likely to increase beyond the temperature range suitable for charging.

In the above embodiment, the ECU 300 determines that there is a possibility that charging may be performed after movement of the electrified vehicle 1, when a charging facility is selected as a destination. However, the ECU 300 may determine that there is a possibility that charging may be performed after movement of the electrified vehicle 1, when home is selected as a destination. Alternatively, the ECU 300 may determine that there is a possibility that charging may be performed after movement of the electrified vehicle 1, when the SOC is equal to or lower than a threshold. Alternatively, the ECU 300 may determine that there is a possibility that charging may be performed after movement of the electrified vehicle 1, when the current time is within a preset time period of the day or within a charging time period of the day identified using a charging history etc.

In the above embodiment, the cooling device 80 is described as an example of the temperature adjustment device that adjusts the temperature of the battery 100. However, the temperature adjustment device that adjusts the temperature of the battery 100 may be, for example, a heating device (not shown) that heats the battery 100. The heating device may be, for example, a heater that runs on the power from the battery 100.

For example, when in the situation where charging is predicted to be performed after traveling of the electrified vehicle 1, the ECU 300 sets the upper limit of the temperature range in which heating is performed to a higher value when the SOC of the battery 100 is low than when the SOC of the battery 100 is high.

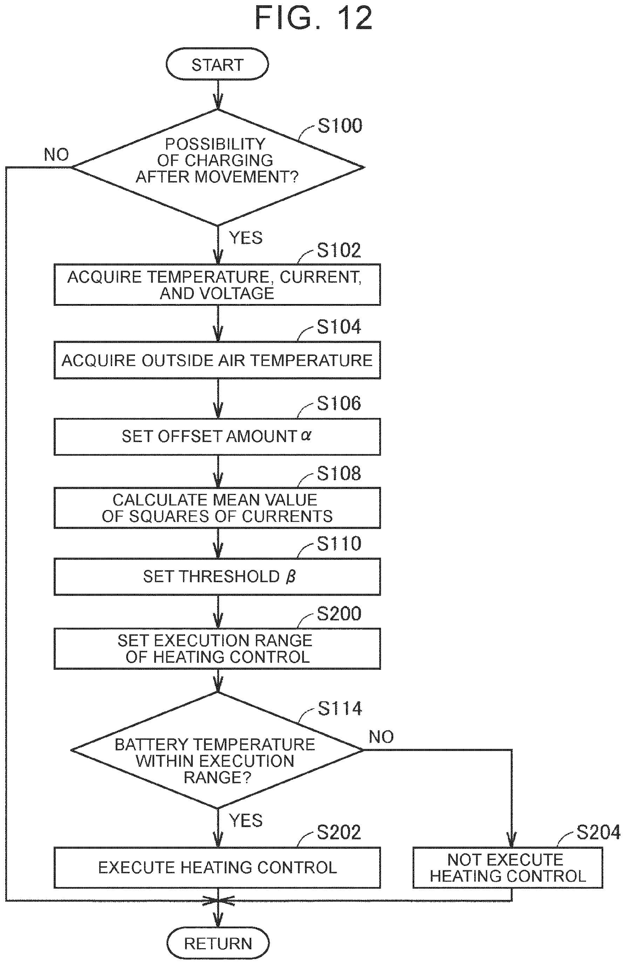

FIG. 12 is a flowchart showing an example of a process that is performed by the ECU 300 according to a modification. A series of steps shown in this flowchart is repeatedly performed by the ECU 300 at predetermined cycles.

Of the steps shown in the flowchart of FIG. 12, the same steps as those in the flowchart of FIG. 4 are denoted by the same step numbers as those in the flowchart of FIG. 4. Since the contents of those steps are the same unless otherwise specified, detailed description thereof will not be repeated.

After the threshold β is set in S110, the process proceeds to S200. In S200, the ECU 300 sets the execution range of heating control.

In this modification, the offset amount α set in S106 refers to the offset amount in the direction of the axis representing the temperature in a map showing the relationship between the SOC and the upper limit value of the temperature at which the heating device is activated (hereinafter referred to as "upper limit temperature").

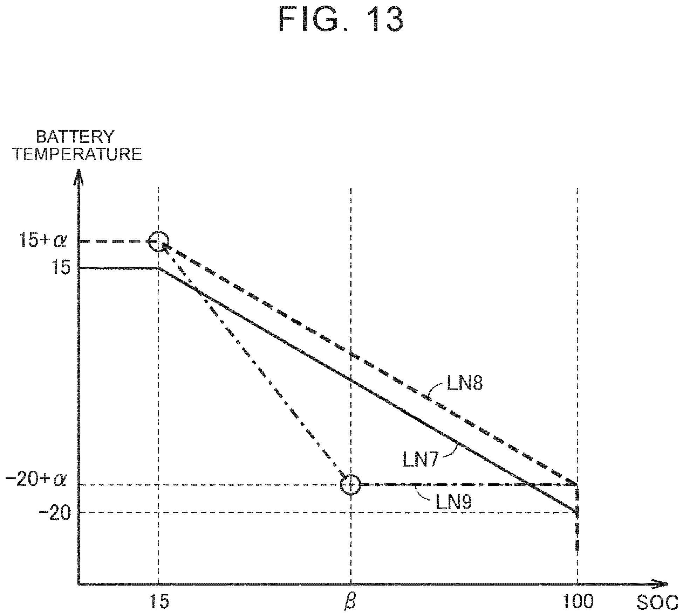

FIG. 13 is a graph illustrating an example of the map showing the relationship between the SOC and upper limit temperature of the battery 100 according to the modification. The ordinate in FIG. 13 represents the temperature TB of the battery 100. The abscissa in FIG. 13 represents the SOC of the battery 100. LN7 (continuous line) in FIG. 13 is a reference line showing how the upper limit temperature changes with a change in SOC of the battery 100. LN8 (dashed line) in FIG. 13 is a line after offset, showing how the upper limit temperature changes with a change in SOC of the battery 100.

As shown by LN7 in FIG. 13, for example, when the SOC of the battery 100 is 15% or less, the upper limit temperature is set to 15°C. When the SOC of the battery 100 is 100%, the upper limit temperature is set to -20°C. When the SOC of the battery 100 is higher than 15% and lower than 100%, the upper limit temperature is set so as to change linearly from 15°C to -20°C while the SOC changes from 15% to 100%. LN8 (dashed line) in FIG. 13 is set by translating LN7 in FIG. 13 by α in the direction in which the temperature increases.

The ECU 300 sets the offset amount α using the outside air temperature To acquired in S104 and the map showing the relationship between the offset amount α and the outside air temperature To. Since the map showing the relationship between the offset amount α and the outside air temperature To is as described with reference to FIG. 6, detailed description thereof will not be repeated.

The ECU 300 sets the threshold β using the mean value of the squares of the currents IB calculated in S108 and the map showing the relationship between the threshold β and the mean value. The threshold β indicates the lower limit value of the SOC range for which the upper limit temperature is the same as that for the SOC of 100%. That is, the upper limit temperature is set to the same value for the SOC in the range from the threshold β to 100%. In this case, for the SOC in the range from 15% to the threshold β, the relationship between the SOC and the upper limit temperature is set so that the upper limit temperature changes linearly with the SOC from the upper limit temperature corresponding to the SOC of 15% to the upper limit temperature corresponding to the threshold β. Since the map showing the relationship between the threshold β and the mean value is as described above with reference to FIG. 7, detailed description thereof will not be repeated.

LN9 (long dashed short dashed line) in FIG. 13 shows the relationship between the SOC and the upper limit temperature that is set based on the offset amount α and the threshold β. As shown by LN9 in FIG. 13, the upper limit temperature is set to "15°C + α" when the SOC is up to 15%. For the SOC in the range from 15% to the threshold β, the upper limit temperature is set so as to change linearly from "15°C + α" to "-20°C + α" with the SOC. The upper limit temperature is set to "-20°C + α" when the SOC is equal to or higher than the threshold β.

When the temperature TB is equal to or higher than the upper limit temperature corresponding to the current SOC, the ECU 300 determines that the battery temperature is within the execution range. When it is determined that the battery temperature is within the execution range (YES in S114), the process proceeds to S202.

In S202, the ECU 300 executes the heating control. For example, the ECU 300 activates the heater to execute the heating control for heating the battery 100. The process then ends. When it is determined that the battery temperature is not within the execution range (NO in S114), the process proceeds to S204.

In S204, the ECU 300 does not execute the heating control. When the heating device is in an activated state, the ECU 300 stops the heating device. When the heating device is in a non-activated state, the ECU 300 keeps the heating device in a non-activated state. The process then ends.

The operation of the electrified vehicle 1 according to this modification based on the above structure and flowchart will be described.

For example, when the user selects a facility (charging station) capable of fast charging as a destination when starting to drive the electrified vehicle 1, it is determined that there is a possibility that charging will be performed after movement of the electrified vehicle 1 (YES in S100). In this case, the temperature TB, the current IB, and the voltage VB are acquired (S102), and the outside air temperature To is also acquired (S104). The offset amount α is then set using the acquired outside air temperature To and the map showing the relationship between the offset amount α and the outside air temperature To (S106). Thereafter, the mean value of the squares of the currents IB in the most recent predetermined period is calculated (S108), and the threshold β is set using the calculated mean value of the squares of the currents IB and the map showing the relationship between the threshold β and the mean value (S 110). The execution range of the heating control is set by setting the upper limit temperature for each SOC using the set offset amount α, the threshold β, and the reference line shown by LN7 in FIG. 13 (S200).

When the temperature TB is within the set execution range, the heating control is executed (S202). When the temperature TB is not within the set execution range, the heating control will not be executed (S204).

In particular, when the SOC is low, the upper limit of the execution range is set to a higher value than when the SOC is high. When the outside air temperature is low, the upper limit of the execution range is also set to a higher value than when the outside air temperature is high.

Therefore, when there is a possibility that charging will be performed after movement of the electrified vehicle 1, the heating control is executed so that the temperature of the battery 100 becomes higher than when the SOC is high. As a result, the temperature of the battery 100 can be increased by the time of arrival at the destination particularly in an environment where the outside air temperature is low. During charging of the battery 100, the temperature of the battery 100 is therefore less likely to be kept lower than the temperature range suitable for charging.

Although an example is described in which the map for setting the offset amount α and the threshold β that are used for the heating control is the same as the map for setting the offset amount α and the threshold β that are used for the cooling control. However, the offset amount α and the threshold β that are used for the heating control may be set using a map different from the map used for the cooling control.

All or part of the above modifications may be combined as appropriate. The embodiment disclosed herein should be construed as illustrative in all respects and not restrictive. The scope of the invention is defined by the claims rather than by the above description, and is intended to include all modifications that fall within the meaning and scope equivalent to those of the claims.

## Claims

1. An electrified vehicle (1), comprising:
an energy storage device (100) configured to supply power to a driving source (10);
a temperature adjustment device configured to perform temperature adjustment of the energy storage device (100); and
an electronic control unit (300) configured to operate the temperature adjustment device when a temperature of the energy storage device (100) falls within a temperature range in which the temperature adjustment is performed, wherein
the electronic control unit (300) is configured to, when in a situation where charging is predicted to be performed after traveling of the electrified vehicle (1), set either an upper or lower limit of the temperature range using a state of charge of the energy storage device (100).

2. The electrified vehicle (1) according to claim 1, wherein
the temperature adjustment device includes a cooling device (80) configured to cool the energy storage device (100), and
the electronic control unit (300) is configured to, when in the situation where charging is predicted to be performed after traveling of the electrified vehicle (1), set the lower limit of the temperature range to a lower value when the state of charge of the energy storage device (100) is low than when the state of charge of the energy storage device (100) is high.

3. The electrified vehicle (1) according to claim 2, wherein the electronic control unit (300) is configured to determine that the situation is that charging is predicted to be performed after traveling of the electrified vehicle (1), when a facility configured to perform charging is set as a destination of the electrified vehicle (1).

4. The electrified vehicle (1) according to claim 3, wherein the electronic control unit (300) is configured to set the lower limit of the temperature range to a lower value when the state of charge at a time the facility is set as the destination is low than when the state of charge at the time the facility is set as the destination is high.

5. The electrified vehicle (1) according to claim 3, wherein the electronic control unit (300) is configured to set the lower limit of the temperature range to a lower value when the state of charge at a time the electrified vehicle (1) arrives at the destination is low than when the state of charge at the time the electrified vehicle (1) arrives at the destination is high.

6. The electrified vehicle (1) according to claim 2, wherein the electronic control unit (300) is configured to set the lower limit of the temperature range to a lower value when an outside air temperature is high than when the outside air temperature is low.

7. The electrified vehicle (1) according to claim 2, wherein the electronic control unit (300) is configured to set the lower limit of the temperature range to a lower value when a load of the driving source (10) is high than when the load of the driving source (10) is low.

8. The electrified vehicle (1) according to claim 1, wherein
the temperature adjustment device includes a heating device configured to heat the energy storage device (100), and
the electronic control unit (300) is configured to, when in the situation where charging is predicted to be performed after traveling of the electrified vehicle (1), set the upper limit of the temperature range to a higher value when the state of charge of the energy storage device (100) is low than when the state of charge of the energy storage device (100) is high.

9. A method for controlling an electrified vehicle (1), the electrified vehicle (1) being equipped with an energy storage device (100) configured to supply power to a driving source (10) and a temperature adjustment device configured to perform temperature adjustment of the energy storage device (100), the method comprising:
operating the temperature adjustment device when a temperature of the energy storage device (100) falls within a temperature range in which the temperature adjustment is performed; and
when in a situation where charging is predicted to be performed after traveling of the electrified vehicle (1), setting either an upper or lower limit of the temperature range using a state of charge of the energy storage device (100).
